# EUROPÄISCHE PATENTSCHRIFT

(11) **EP 1 750 106 B1**
(45) Veröffentlichungstag und Bekanntmachung des Hinweises auf die Patenterteilung: **12.10.2011**
(21) Anmeldenummer: 06118323.2
(22) Anmeldetag: 02.08.2006
(51) Int. Cl.: G01J 3/42, G01J 3/28, G01N 21/27

(54) **Spektralphotometer zur Messung mit einer gegenüber Aussenlicht offenen Messzelle**
Spectrophotometer for measurements with measuring chamber open to ambient light
Spectrophotomètre pour des mesures avec une cellule de mesure ouverte à la lumière ambiente

(30) Priorität: 04.08.2005 DE 102005037842
(43) Veröffentlichungstag der Anmeldung: 07.02.2007
(73) Patentinhaber: Hach Lange GmbH, 14163 Berlin (DE)
(72) Erfinder: Haase, Barbara, 10965, Berlin (DE); Steinhauer, Frank, 10965, Berlin (DE)
(74) Vertreter: Eisenführ, Speiser & Partner

(56) Entgegenhaltungen:
- WO-A-97/08523
- WO-A2-01/06232

## Beschreibung

Die Erfindung betrifft ein Spektralphotometer für die UV-VIS-Spektroskopie, das zur Messung mit einer offenen Messzelle geeignet ist.

Spektralphotometer für die UV-VIS-Spektroskopie unterschiedlichster Bauart sind aus dem Stand der Technik bekannt. Sie verfügen im Allgemeinen über eine schaltbare Lichtquelle zur Bereitstellung eines für die Messung benötigten Lichtstrahls und es ist eine Optik vorhanden, die den in der Lichtquelle erzeugten Lichtstrahl durch eine Messzelle auf einen Lichtdetektor leitet. Schließlich verfügen Spektralphotometer häufig über eine Auswerteeinheit, die eingangsseitig mit dem Lichtdetektor der Lichtquelle verbunden ist und die vom Lichtdetektor bereitgestellten Messwerte verarbeitet.

Bei bekannten Spektralphotometern, insbesondere (Hand-)Geräten für den Außeneinsatz, verfügt die Messzelle über eine Schließeinrichtung, die die Messzelle nach Einbringung der Probe schließt und von Außenlichteinflüssen während der Messung abschirmt. Die zu vermessende Probe wird in der Regel in einer Küvette bereitgestellt. Zur Messung muss demnach zunächst die Schließeinrichtung zum Öffnen der Messzelle betätigt, dann die Probe eingesetzt und anschließend die Schließeinrichtung erneut zum Schließen der Messzelle betätigt werden. Die Messprozedur ist umständlich und fehleranfällig, wenn z. B. die Schließeinrichtung die Messzelle nicht im gewünschten Maße gegen Außenlichteinflüsse ab-dunkelt und dies nicht bei der Messung auffällt, sind Messfehler die Folge. Weiterhin kann die Schließeinrichtung gerade bei Geräten für den Außeneinsatz schnell beschädigt werden, so dass das Gerät ausfällt. Schließlich sind die Herstellungskosten für die Geräte erhöht, weil der Einbau der Schließeinrichtung die Fertigungszeit und die Rohstoffkosten erhöht und der für die Schließeinrichtung notwendige Bauraum bei der Entwicklung der Geräte berücksichtigt werden muss.

Die WO 97/08523 A beschreibt ein Spektralphotometer, das mindestens eine Lichtquelle zur Bestrahlung von Proben enthält, die an- und ausgeschaltet werden kann. Weiterhin verfügt das Gerät über einen Lichtdetektor, einen Speicher und einen Mikrocontroller, die miteinander verbunden sind.

Die WO 01/06232 A2 beschreibt ein Spektralphotometer; welches Messungen in einer vom Aussenlicht abgeschirmten Messanordnung bei stets eingeschalteter Lichtquelle (Referenzlicht) vornimmt.

Der Erfindung liegt nun die Aufgabe zugrunde, die geschilderten Nachteile des Standes der Technik zu überwinden und ein in diesem Sinne verbessertes Spektralphotometer bereitzustellen.

Diese Aufgabe wird durch das Spektralphotometer nach Anspruch 1 gelöst. Das Spektralphotometer nach Anspruch 1 enthält eine schaltbare Lichtquelle zur Bereitstellung eines Messstrahls, eine Optik, die den Messstrahl durch eine Messzelle auf einen Lichtdetektor leitet, und eine Auswerteeinheit, die eingangsseitig mit dem Lichtdetektor und der Lichtquelle verbunden ist. Das Spektralphotometer zeichnet sich dadurch aus, dass
(i) die Auswerteeinheit über ein Speichermittel verfügt, in der ein Wert für eine Lichtintensität (I₀) der Lichtquelle hinterlegt ist, der durch Differenzmessung einer Intensität (I_{0,ein}) bei eingeschalteter Lichtquelle und einer Intensität (I_{0,aus}) bei ausgeschalteter Lichtquelle bei jeweils nicht geschlossener Messzelle ermittelt wurde,
(ii) die Auswerteeinheit ausgelegt ist, bei einer im Messstrahl angeordneten Probe einen Wert für eine Lichtintensität (I) zu ermitteln, der durch Differenzmessung einer Intensität (Iₑᵢₙ) bei eingeschalteter Lichtquelle und einer Intensität (Iₐᵤₛ) bei ausgeschalteter Lichtquelle bei jeweils nicht geschlossener Messzelle ermittelt wurde, und
(iii) die Auswerteeinheit ausgelegt ist, durch Differenzbildung aus den Intensitäten (I₀) und (I) einen Wert für die durch Absorption des Messstrahls in der Probe geminderte Intensität (I_{abs}) zu ermitteln.

Mit Hilfe des erfindungsgemäßen Spektralphotometers ist demnach eine Messung an einer offenen Messzelle, d. h. einer Messzelle in die Außenlicht mit wechselnder Intensität eindringen kann, möglich. Überraschenderweise hat es sich gezeigt, dass die an sich einfachen konstruktiven Maßnahmen im Bereich der Auswerteeinheit ausreichen, um in der Praxis für Außenmessungen hinreichend genaue Messergebnisse zu liefern. Da das Spektralphotometer über keine Schließeinrichtung mehr verfügen muss, die die Messzelle während der Messung nach Außen hin vor Lichteinfall abschirmt, ist die gesamte Messprozedur zeitlich schneller durchführbar. Weiterhin kann natürlich auf die aus dem Stand der Technik bekannten Schließeinrichtungen für die Messzelle verzichtet werden, was die Herstellungs-, Entwicklungs- und Wartungskosten senkt.

Das erfindungsgemäße Spektralphotometer ist für Messungen im UV-VIS-Bereich ausgelegt. Es ist ferner als Außengerät konzipiert, d.h. Gewicht, Design, Energieversorgung, Schnittstellen für Peripheriegeräte und ggf. modularer Aufbau sollen einen mobilen Einsatz des Gerätes ermöglichen. Insbesondere ist das Spektralphotometer als Handgerät für den mobilen Einsatz eingerichtet. Ein für die erfindungsgemäßen Zwecke geeignetes Spektralphotometer kann konstruktiv auf die in üblichen Geräten verwendeten Messanordnungen, optischen Elemente, elektrischen Bauteile, Gehäusekonstruktionen, Versorgungselemente, Auswerte- und Steuereinheiten, etc. zurückgreifen.

Außerdem ist in dem Speichermittel der Auswerteeinheit ein Höchstwert für die Intensität. (Iₑᵢₙ) und/oder die Intensität (Iₐᵤₛ) hinterlegt, und die Auswerteeinheit ist ausgelegt, bei Erreichen oder bei Überschreiten des Höchstwertes bei einer Messung ein Warnsignal zu erzeugen. Das Warnsignal wird über eine mit der Auswerteeinheit verbundene Ausgabeeinheit ausgegeben. Durch die genannten Maßnahmen kann bei übermäßig starker Lichtintensität in der Umgebung ein Übersteuern des Lichtedetektors und damit ein möglicherweise resultierender Messfehler vermieden werden. Über die Ausgabeeinheit kann beispielsweise der Benutzer aufgefordert werden, die Messung zu wiederholen und dabei den Lichteinfall von Außen in die Messzelle z. B. durch Abdecken der Messzelle mit der Hand zu reduzieren.

Nach einer bevorzugten Ausgestaltung zeichnet sich das erfindungsgemäße Spektralphotometer dadurch aus, dass die Intensität (Iₑᵢₙ) in den letzten 10 bis 50 ms vor dem Ausschalten der Lichtquelle erfasst wird. Durch diese relativ einfache konstruktive Maßnahme kann sichergestellt werden, dass Messfehler aufgrund von Intensitätsschwankungen der Lichtquelle gering gehalten werden, da die Lichtquelle in der Regel am Ende der Aktivierungszeit (der Zeit, in der sie eingeschaltet ist) sich auf einem weitgehend konstanten Level der Intensität eingependelt hat. Vorzugsweise liegt dabei die Aktivierungszeit, also der Zeitraum zwischen dem Einschalten der Lichtquelle und dem Ausschalten der Lichtquelle, im Bereich von 1 bis 5 s, insbesondere 1,5 bis 2,5 s.

Weiterhin ist bevorzugt, wenn die Intensität (Iₐᵤₛ) 50 bis 500 ms nach dem Ausschalten der Lichtquelle erfasst wird. Die genannte Obergrenze des Bereichs trägt dem Umstand Rechnung, dass bei Außenmessungen Schwankungen der Lichtintensität in der Umgebung in einem Zeitfenster von < 500 ms meist nur relativ gering sind. Die Untergrenze trägt dem Umstand Rechnung, dass die Emission der Lichtquelle nicht schlagartig nach dem Ausschalten abklingt, aber herkömmliche Lichtquellen für die Spektralphotometrie in der Regel nach 50 ms nur noch eine vernachlässigbar geringe Emission aufweisen.

Nachfolgend wird die Erfindung anhand eines Ausführungsbeispiels und der dazugehörigen Zeichnungen näher erläutert. Es zeigen:
- Fig. 1: einen Prinzipaufbau eines für die Zwecke der Erfindung geeigneten Spektralphotometers;
- Fig. 2: einen typischen Signalverlauf einer Messung mit einem Spektralphotometer nach Fig. 1 und
- Fig. 3: eine schematische Darstellung der für die Erfindung wesentlichen Bauelemente des Spektralphotometers.

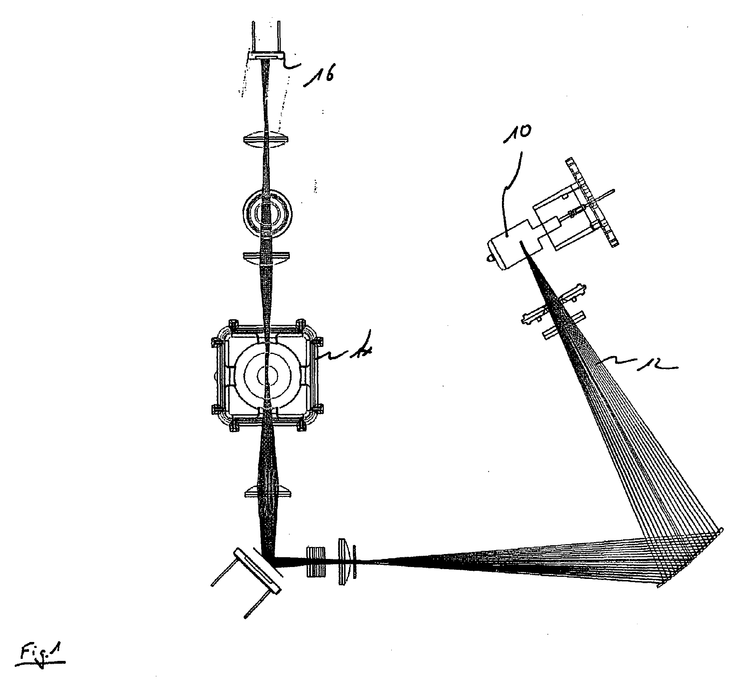

Fig. 1 illustriert anhand einer Anordnung ausgewählter Bauteile eines Spektralphotometers den prinzipiellen Aufbau eines solchen Gerätes. Das Spektralphotometer der Fig. 1 verfügt über eine Lichtquelle 10, die einen Messstrahl 12 emittiert, der über verschiedene optische Elemente geführt und durch eine Messzelle 14 geleitet wird, um letztendlich auf einen Lichtdetektor 16 zu treffen. Die Messzelle 14 ist dazu ausgelegt eine Küvette aufzunehmen und im Strahlengang auszurichten. Die Lichtquelle 10 ist schaltbar ausgelegt, d. h. sie kann mit geeigneten Steuermitteln zumindest zwischen den Betriebszuständen 'ein' und 'aus' geschaltet werden. Der Lichtdetektor 16 erfasst die Intensität des auf ihn auftreffenden Messstrahls 12 und ist vorliegend insbesondere auf die Erfassung von einzelnen Wellenlängen oder Wellenlängenbereichen aus dem UV-VIS-Spektrum ausgelegt. Der Messzelle 14 ist keine Schließeinrichtung zugeordnet, mit der während einer Messung der Einfall von Licht aus der Umgebung verhindert werden soll.

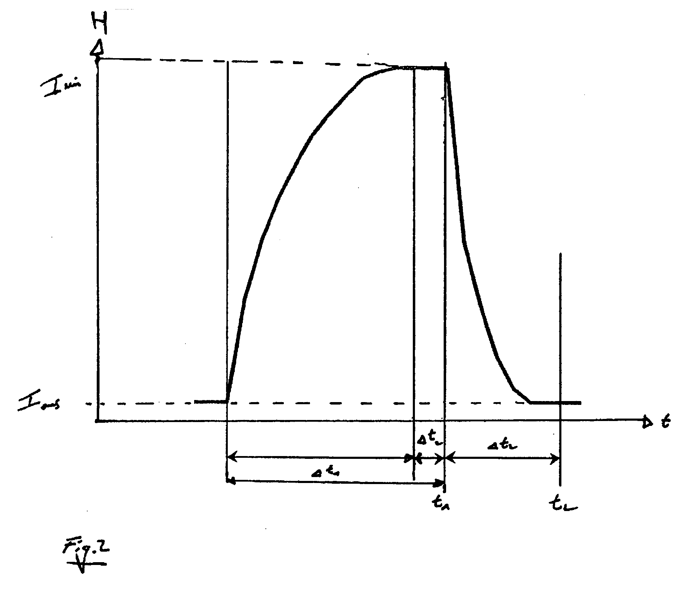

Fig. 2 zeigt schematisch einen Signalablauf, der sich bei bestimmungsgemäßem Gebrauch des Spektralphotometer aus Fig. 1 und Erfassung einer bestimmten Wellenlänge am Lichtdetektor 16 abgreifen lässt. Nach dem Einschalten der Lichtquelle 10 steigt die Lichtintensität rasch an, bis sie einen maximalen Wert (Iₑᵢₙ) erreicht und sich auf diesem Niveau einpendelt. Bei Spektralphotometern für den mobilen Einsatz, insbesondere bei Handgeräten, beträgt eine Aktivierungszeit Δ t₁ vorzugsweise 1 bis 5 s, besonders bevorzugt 1,5 bis 2,5 s. Die Aktivierungszeit Δ t₁ ist dabei die Zeit, die zwischen dem Ein- und Ausschalten verstreicht. Am Ende dieser Zeitspanne, genauer, zu einem Zeitpunkt t₁ in einem Zeitintervall Δt₂, das 10 bis 50 ms lang ist und beim Ausschalten der Lichtquelle 10 endet, wird die Lichtintensität (Iₑᵢₙ) mit dem Lichtdetektor 16 erfasst. Nach dem Ausschalten klingt der durch die Lichtquelle 10 bereitgestellte Anteil an der Lichtintensität schnell ab und es wird etwa 50 bis 500 ms, nach dem Ausschalten der Lichtquelle 10 (Zeitintervall Δt₂) eine zweite Messung zu einem Zeitpunkt t₂ durchgeführt, bei der die verbleibende Lichtintensität (Iₐᵤₛ) erfasst wird.

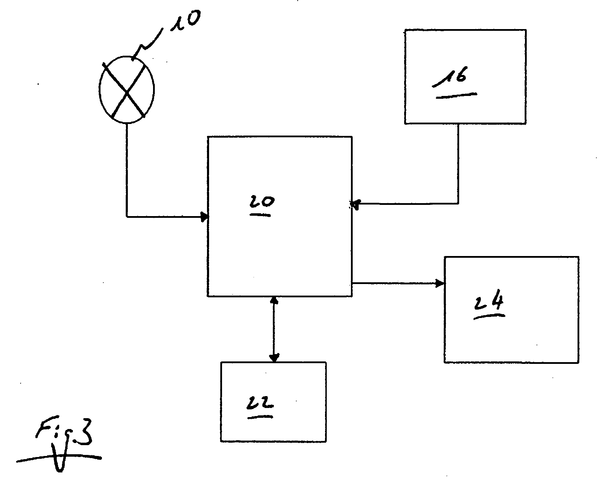

Fig. 3 zeigt nun schematisch die wesentlichen Bauteile, die zur erfindungsgemäßen Messung notwendig sind. Die Lichtquelle 10 ist über eine Signalleitung mit einer Auswerteeinheit 20 verbunden. Über diese Signalleitung kann ein Aktivitätsstatus der Lichtquelle 10 an die Auswerteeinheit 20 übermittelt werden, d. h. in der Auswerteeinheit 20 kann zumindest erfasst werden, ob die Lichtquelle 10 an- oder ausgeschaltet ist. Die Auswerteeinheit 20 ist ferner mit dem Lichtdetektor 16 über eine Signalleitung verbunden, so dass die am Lichtdetektor 16 erfassten Messdaten der Lichtintensität an der Auswerteeinheit 20 bereitgestellt werden. Schließlich ist die Auswerteeinheit 20 noch mit einem Speichermittel 22 und einer Ausgabeeinheit 24 über Signalleitungen verbunden. In der Speichereinheit 22 können u. a. erfasste Lichtintensitäten hinterlegt und von der Auswerteeinheit 20 wieder ausgelesen werden. Die Ausgabeeinheit 24 ermöglicht in bestimmten Betriebssituationen und in noch näher erläuterter Art und Weise eine Interaktion mit dem Benutzer des Spektralphotometers.

In dem Speichermittel 22 ist ein Wert für eine Lichtintensität (I₀) der Lichtquelle 10 hinterlegt, der durch Differenzmessung einer Lichtintensität (I_{0,ein}) bei eingeschalteter Lichtquelle 10 und einer Lichtintensität (I_{0,aus}) bei ausgeschalteter Lichtquelle 10, jeweils gemessen bei einer nicht geschlossenen Messzelle 14, ermittelt wurde. Die genannten Werte können zu einem beliebigen Zeitpunkt in dem Speichermittel 22 hinterlegt werden, so beispielsweise auch schon vor der Auslieferung des Gerätes vom Hersteller erfasst und abgespeichert werden. Eine Neufestlegung von (I₀) ist nur dann notwendig, wenn die Lichtquelle 10 ausgetauscht wird.

Im mobilen Einsatz erfolgt die Messung wie folgt: Die zu vermessende Probe wird in gelöster Form in eine Küvette eingebracht und selbige in der Messzelle 14 platziert. Dann wird mit Hilfe eines hier nicht dargestellten Betätigungsschalters die Lichtquelle 10 eingeschaltet und für etwa 2 s aktiviert. Kurz vor Ablauf der Einschaltzeit und zwar etwa 10 bis 50 ms vor dem Ausschalten der Lichtquelle 10 wird die Lichtintensität (Iₑᵢₙ) durch den Lichtdetektor 16 erfasst und in die Auswerteeinheit 20 eingelesen. Etwa 50 bis 500 ms nach dem Ausschalten der Lichtquelle 10 erfolgt eine weitere Messung der Lichtintensität (Iₐᵤₛ) mittels des Lichtdetektors 16 und auch dieser Wert wird an die Auswerteeinheit 20 übermittelt. Aus den Intensitäten (Iₑᵢₙ) bzw. (Iₐᵤₛ) bei eingeschalteter und ausgeschalteter Lichtquelle 10 wird durch Differenzbildung ein Wert für die Lichtintensität (I) in der Auswerteeinheit 20 ermittelt. Schließlich wird durch Differenzbildung aus den Intensitäten (I₀) und (I) ein Wert für die durch Absorption des Messstrahls 12 in der Probe geminderte Intensität (I_{abs}) errechnet. Letzterer Wert kann in herkömmlicher Weise Aufschluss über den Gehalt der Probe an einem zu messenden Bestandteil geben.

Sollte die Intensität des aus der Umgebung in die Messzelle 14 fallenden Lichts sehr hoch sein, so wird mit Hilfe eines ebenfalls in dem Speichermittel 22 hinterlegten Höchstwerts ein Übersteuern des Lichtdetektors 16 verhindert. Dies wird dadurch erreicht, dass dieser Höchstwert mit der Intensität (Iₑᵢₙ) und/oder der Intensität (Iₐᵤₛ) verglichen wird und bei Überschreiten des Höchstwerts ein Warnsignal erzeugt wird. Das Warnsignal wird an die verbundene Ausgabeeinheit 24 weitergeleitet und dann z. B. als akustisches Signal ausgegeben. Der Benutzer wird aufgefordert sein, die Außenlichtintensität z. B. durch Auflegen seiner Hand auf die Messzelle 14 zu mindern und die Messung zu wiederholen.

## Patentansprüche

1. Spektralphotometer, enthaltend
eine schaltbare Lichtquelle zur Bereitstellung eines Messstrahls,
eine Optik, die den Messstrahl durch eine Messzelle auf einen Lichtdetektor leitet
und eine Auswerteeinheit, die eingangsseitig mit dem Lichtdetektor und der Lichtquelle verbunden ist, **dadurch gekennzeichnet, dass**
(i) die Auswerteeinheit über ein Speichermittel verfügt, in der ein Wert für eine Lichtintensität (I₀) der Lichtquelle hinterlegt ist, der durch Differenzmessung einer Intensität (I_{0,ein}) bei eingeschalteter Lichtquelle und einer Intensität (I_{0,aus}) bei ausgeschalteter Lichtquelle bei jeweils nicht geschlossener Messzelle ermittelt wurde,
(ii) die Auswerteeinheit ausgelegt ist, bei einer im Messstrahl angeordneten Probe einen Wert für eine Lichtintensität (I) zu ermitteln, der durch Differenzmessung einer Intensität (Iₑᵢₙ) bei eingeschalteter Lichtquelle und einer Intensität (Iₐᵤₛ) bei ausgeschalteter Lichtquelle bei jeweils nicht geschlossener Messzelle ermittelt wurde, und
(iii) die Auswerteeinheit ausgelegt ist, durch Differenzbildung aus den Intensitäten (I₀) und (I) einen Wert für die durch Absorption des Messstrahls in der Probe geminderte Intensität (I_{abs}) zu ermitteln
und dass in dem Speichermittel der Auswerteeinheit ein Höchstwert für der Intensität (Iₑᵢₙ) und/oder Intensität (Iₐᵤₛ) hinterlegt ist und die Auswerteeinheit ausgelegt ist, bei Erreichen oder Überschreiten des Höchstwerts bei einer Messung ein Warnsignal zu erzeugen, das über eine mit der Auswerteeinheit verbundene Ausgabeeinheit ausgegeben wird.

2. Spektralphotometer nach Anspruch 1, **dadurch gekennzeichnet, dass** die Intensität (Iₑᵢₙ) in den letzten 10 bis 50 ms vor dem Ausschalten der Lichtquelle erfasst wird.

3. Spektralphotometer nach Anspruch 1, **dadurch gekennzeichnet, dass** die Intensität (Iₐᵤₛ) 50 bis 500 ms nach dem Ausschalten der Lichtquelle erfasst wird.

## Claims

1. Spectrophotometer, containing a switchable light source for providing a measuring beam, an optical system, which guides the measuring beam through a measuring cell, to a light detector and an evaluation unit, which is connected on the input side to the light detector and the light source, **characterised in that**
(i) the evaluation unit has a storage means, in which a value is stored for a light intensity (I₀) of the light source, which was determined by difference measurement of an intensity (I_{0,on}) when the light source is switched on and an intensity (I_{0,off}) when the light source is switched off, when the measuring cell is not closed in each case,
(ii) the evaluation unit is configured to determine, with a sample arranged in the measuring beam, a value for a light intensity (I), which was determined by difference measurement of an intensity (Iₒₙ) when the light source is switched on and an intensity (I_{off}) when the light source is switched off, when the measuring cell is not closed in each case, and
(iii) the evaluation unit is configured to determine by difference formation from the intensities (I₀) and (I), a value for the intensity (I_{abs}) reduced by absorption of the measuring beam in the sample and **in that** a maximum value for the intensity (Iₒₙ) and/or intensity (I_{off}) is stored in the storage means of the evaluation unit and the evaluation unit is configured to generate a warning signal on reaching or exceeding the maximum value during a measurement, which warning signal is output by an output unit connected to the evaluation unit.

2. Spectrophotometer according to claim 1, **characterised in that** the intensity (Iₒₙ) is detected in the last 10 to 50 ms before the light source is switched off.

3. Spectrophotometer according to claim 1, **characterised in that** the intensity (I_{off}) is detected 50 to 500 ms after the light source is switched off.

## Revendications

1. Spectrophotométre comportant
une source lumineuse commutable pour la mise à disposition d'un faisceau de mesure,
une optique qui envoie le faisceau de mesure sur un détecteur de lumière à travers une cellule de mesure,
et une unité d'exploitation, qui est reliée du côté de l'entrée au détecteur de lumière et à la source lumineuse, **caractérisé en ce que**
(i) l'unité d'exploitation dispose d'un moyen de mémorisation, dans lequel est mémorisée une valeur d'une intensité (|₀) lumineuse de la source lumineuse qui a été déterminée par une mesure différentielle d'une intensité (|_{0,ein}) lorsque la source lumineuse est en circuit et une intensité (|_{0,aus}) lorsque la source lumineuse est hors circuit alors que respectivement la cellule de mesure n'est pas fermée.
(ii) L'unité d'exploitation est conçue pour déterminer, pour un échantillon disposé dans le faisceau de mesure, une valeur d'une intensité (|) lumineuse qui a été déterminée par une mesure différentielle d'une intensité (|ₑᵢₙ) lorsque la source lumineuse est en circuit et d'une intensité (|ₐᵤₛ) lorsque la source lumineuse est hors circuit alors que respectivement la cellule de mesure n'est pas fermée, et
(iii) l'unité d'exploitation est conçue pour déterminer, par formation d'une différence entre les intensités (|₀) et (|) , une valeur de l'intensité (|_{abs}) diminuée par absorption du faisceau de mesure dans l'échantillon
et **en ce que**, dans le moyen de mémorisation de l'unité d'exploitation, une valeur très grande de l'intensité (|ₑᵢₙ) et/ou de l'intensité (|ₐᵤₛ) est mémorisée et l'unité d'exploitation est conçue pour produire, lorsque la valeur très grande est atteinte ou dépassée lors d'une mesure, un signal d'avertissement, qui est émis par une unité d'émission reliée à l'unité d'exploitation.

2. Spectrophotomètre suivant la revendication 1, **caractérisé en ce que** l'intensité (|ₑᵢₙ) est relevée dans les dernières 10 à 50 ms avant la mise hors circuit de la source lumineuse.

3. Spectrophotomètre suivant la revendication 1, **caractérisé en ce que** l'intensité (|ₐᵤₛ) est relevée de 50 à 500 ms après la mise hors circuit de la source lumineuse.
